# EUROPEAN PATENT APPLICATION

(11) **EP 0 758 524 A1**
(43) Date of publication of application: **19.02.1997**
(21) Application number: 95305626.4
(22) Date of filing: 11.08.1995
(51) Int. Cl.: A01G 9/10

(54) **Seedling tray and seedling transplanting machine**

(71) Applicant: Houng, Chong-Loung, Tucheng City, Taipei Hsien (TW); Wang, Po-Ching, Tucheng City, Taipei Hsien (TW)
(72) Inventor: Houng, Chong-Loung, Tucheng City, Taipei Hsien (TW); Wang, Po-Ching, Tucheng City, Taipei Hsien (TW)
(74) Representative: Powell, Stephen David

(57) **Abstract**

A seedling tray (100) for use in conjunction with automated transplanting apparatus to transplant the seedlings (200), comprising cells (110) for containing the growing medium, each cell (110) being partitioned off by a wall (121,122) and having its top and bottom left open. The wall (121,122) is sloped in such a way that the bottom of the cell (110) is narrower than the top. Besides, a plurality of fin-like members (130) in conjunction are used to support and prevent the growing medium from falling away from the cell (110). The fin-like members (130) are used to keep the growing of roots downwards so as to eliminate root binding of the seedlings (200). The provision of the bottom of the cell (110) being left open allows air-pruning to the roots of the seedlings (200). The seedling transplanting machine comprises a machine base having a platform (22) at the top and a rail (12) transversely disposed above platform (22) and reciprocated longitudinally, a sliding frame (51) placed on the platform (22) and reciprocated along the rail (12) to carry a seedling tray (100), a first transmission mechanism (1-6) controlled to move the sliding frame (51) along the rail (12), a second transmission mechanism (8-15) controlled to reciprocate the rail (12) longitudinally, and a seedling drop unit (19) controlled to draw seedlings (200) away from the tray (100) and then to plant the seedlings (200) in to soil.

## Description

The present invention relates to nursery utensils, and more particularly, to a seedling tray for cultivating seedlings to be subsequently transplanted to other places as in the fields or flowerpots and used in conjunction with automated transplanting machines in the transplanting process. It also relates to agricultural machinery, and relates more particularly to a transplanting machine suitable for use in farm lands as well as greenhouses for transplanting seedlings.

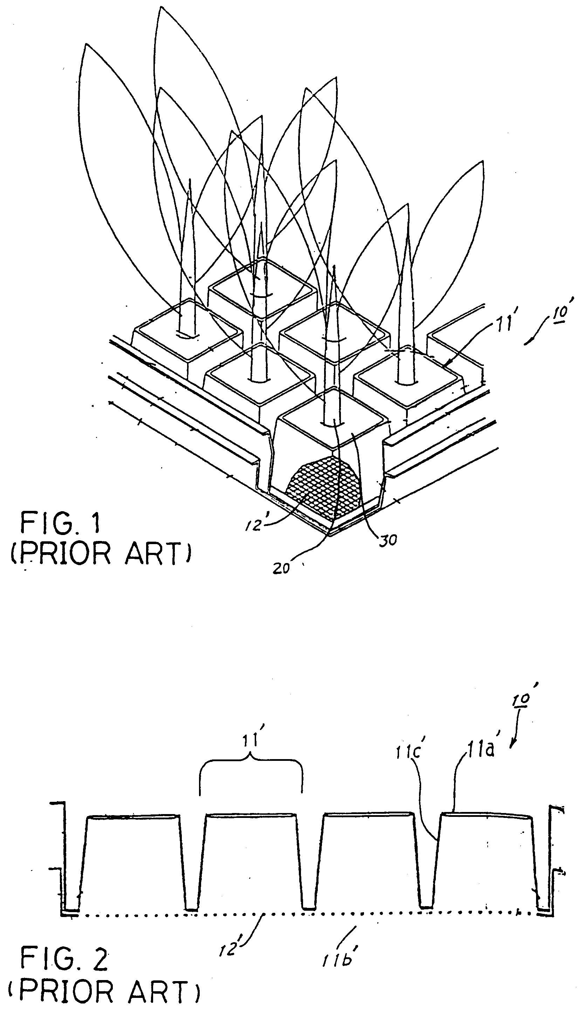

Fig. 1 shows a conventional seedling tray 10' that can be used in conjunction with automated transplanting apparatus (not shown) to transplant the seedlings on the seedling tray to other places. Referring also to Fig. 2, a plurality of seedling cells 11' are set apart on the seedling tray 10', each cell 11' being used to cultivate a single seedling. The top 11a' of each cell 11' is left open so as to grow the seedling; and the bottom 11b' is also left open but mounted with a screen 12'. The provision of the screen 12' allows air-pruning through the bottom 11b' to the roots of the seedling while preventing the growing medium (such as peat moss or peat mix) from dropping away from the cell 11' when transporting the seedling tray.

As shown in Fig. 2, the cross section of the empty space in each cell 11' is substantially a trapezoid. This allows the growing medium, along with the seedling, to be easily removed from the cell 11' through the bottom 11b' by using sucking means provided on the transplanting apparatus (not shown) during transplantation (the screen 12' is removed beforehand during the transplantation).

It is a drawback of the conventional seedling tray 10' that the surrounding walls 11c' of each of the cells 11' are flat surfaced, which causes the roots of the seedlings, when growing to the walls 11c', to be tangled and bound thereabout, thereby retarding the growth of the roots. It is another drawback of the conventional seedling tray 10' that the screen 12' is inconvenient to handle. Moreover, it adds weight to the seedling tray 10' and extra cost to manufacture. There exists, therefore, a need for a seedling tray that can allow the roots of the seedlings to grow with a less degree of binding of the roots and can be used without the provision of a screen on the bottom.

Furthermore, various agricultural machinery and farm implements are known and intensively used for different purposes. These machinery and implements greatly help farmers increase the yield, however these machinery and implements are commonly expensive. Because conventional agricultural machinery and farm implements are designed for different purposes, farmers may have to prepare various machines. For example, for raising rices, a farmer may have to prepare plows, rolls, seed drills, transplanting machines, etc. Furthermore, conventional automated transplanting machines are specifically designed for transplanting seedlings in the paddy field. They are not applicable for use in greenhouses.

It is therefore a primary objective of the present invention to provide a seedling tray which allows the roots of the seedlings cultivated thereon not to be tangled and bound with each other.

It is another objective of the present invention to provide a seedling tray which can be used without the need of a screen for the bottom to rest thereon.

It is still another objective of the present invention to provide a seedling tray which is bottomless so as to facilitate air-pruning to the roots during cultivation and also provide convenience to the adaptation to automatic transplanting.

It is yet another objective of the present invention to provide a seedling tray which is bottomless but the growing medium therewithin would not drop down through the bottom opening when transporting the seedling tray.

It is still another objection of the present invention to provide a seedling transplanting machine which can automatically transplant seedling both in paddy field and greenhouse.

In accordance with the foregoing and other objectives of the present invention, there is provided with novel seedling tray. The seedling tray comprises at least a cell for containing the growing medium. The cell is partitioned off by a wall and has its top and bottom left open. The wall is sloped in such a way that the bottom of the cell is narrower than the top. Besides, a plurality of fin-like members are provided on the wall surrounding the cell.

In function, the wall and the fin-like members in conjunction are used to support and prevent the growing medium from falling away from the cell. And the fin-like members are used to force part of the roots of the seedling to grow downwards so as to eliminate root binding of the seedlings. The provision of the bottom of the cell being left open allows air-pruning to the roots of the seedlings.

In the seedling transplanting machine of the present invention, a sliding frame is mounted on a platform above the machine base of the seedling transplanting machine and driven to move the seedling tray transversely as well as longitudinally. And, the seedling transplanting machine comprises a seedling drop unit which produces a vacuum to draw seedlings with the media away from the seedling tray and then to plant them in the soil or flower pots. Also a microprocessor-operated controller is provided and installed in the seedling transplanting machine to control the operation automatically.

The present invention can be more fully understood by reading the subsequent detailed description of the preferred embodiments thereof with references made to the accompanying drawings, wherein:
Fig. 1 shows a prior art seedling tray;
Fig. 2 shows a cross sectional view of the prior art seedling tray of Fig. 1;
Fig. 3 shows a top view of a seedling tray according to the present invention;
Fig. 4 shows a perspective view of the seedling tray of Fig. 3 with a portion cut away to show the inside of a seedling cell in the seedling tray;
Fig. 5 shows a cross sectional view of the seedling tray of Fig. 3;
Fig. 6 shows a cross sectional view of another embodiment of the seedling tray according to the present invention;
Fig. 7 shows a schematic diagram illustrating how a seedling along with its growing medium is removed from the seedling tray to be transplanted to another place;
Fig. 8 is a perspective view of a seedlings transplanting machine for use in greenhouses according to the present invention;
Fig. 9 shows the structure of a tillage mechanism for a seedling transplanting machine according to the present invention;
Fig. 10 shows the seedling drop unit and the arrangement of the accelerating lever mechanism according to the present invention.
Fig. 11 is a top view in plain of Figure 10;
Fig. 12 shows the installation of cam and spring sets driven to reciprocate the movable sleeve of the seedling drop unit according to the present invention; and
Fig. 13 shows an alternate form of the seedling transplanting machine according to the present invention.

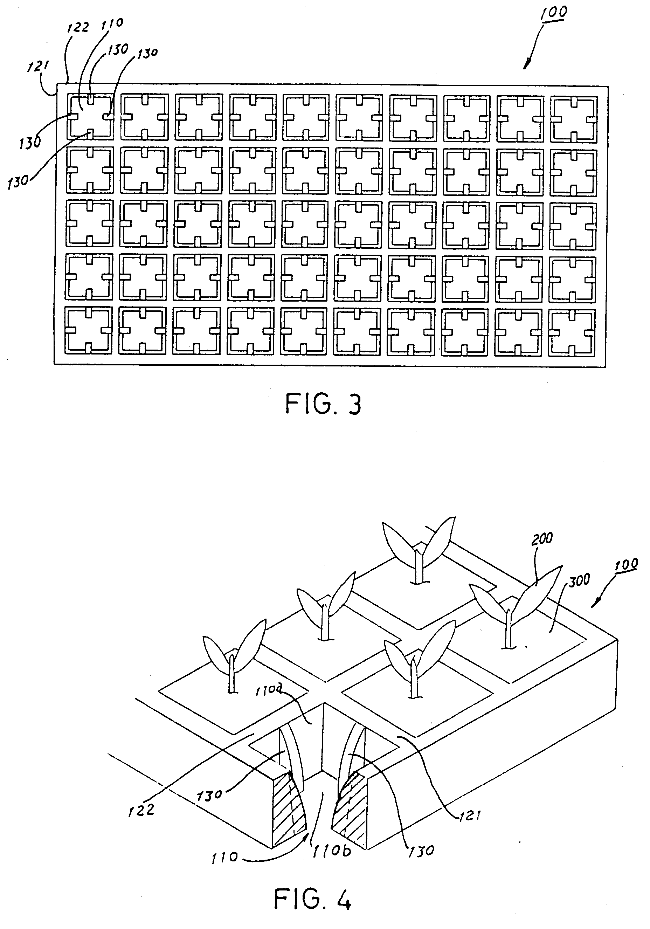

Referring to Figs. 3 and 4, a seedling tray 100 designed in accordance with the present invention is shown. Fig. 3 shows a top view of the seedling tray 100, on which a 5 x 10 array of seedling cells 110 are partitioned off by a number of lengthwise walls 121 (here in this example a total of 6) and a number of crosswise walls 122 (here in this example a total of 11). A single unit of the seedling tray 100 thus can be used to cultivate a total of 50 seedlings. Note that the number of the cells 110 illustrated here is for exemplary purpose only and not intended as a limitation to the scope of the present invention. The number can be arbitrarily changed depending actual needs. Moreover, each cell 110 has its top 110a and bottom 110b left open, and four fin-like members 130 are provided within each cell 110 on the inside of the walls 121, 122 that set apart the cells 110.

As shown in Fig. 4, each cell 110 is used to cultivate a single seedling 200 on a growing medium 300 such as peat moss, peat mix, or cake-like peat, which is normally a soft matter that is compresesible. The growing medium 300 can be filled into each cell 110 to cultivate the seedlings.

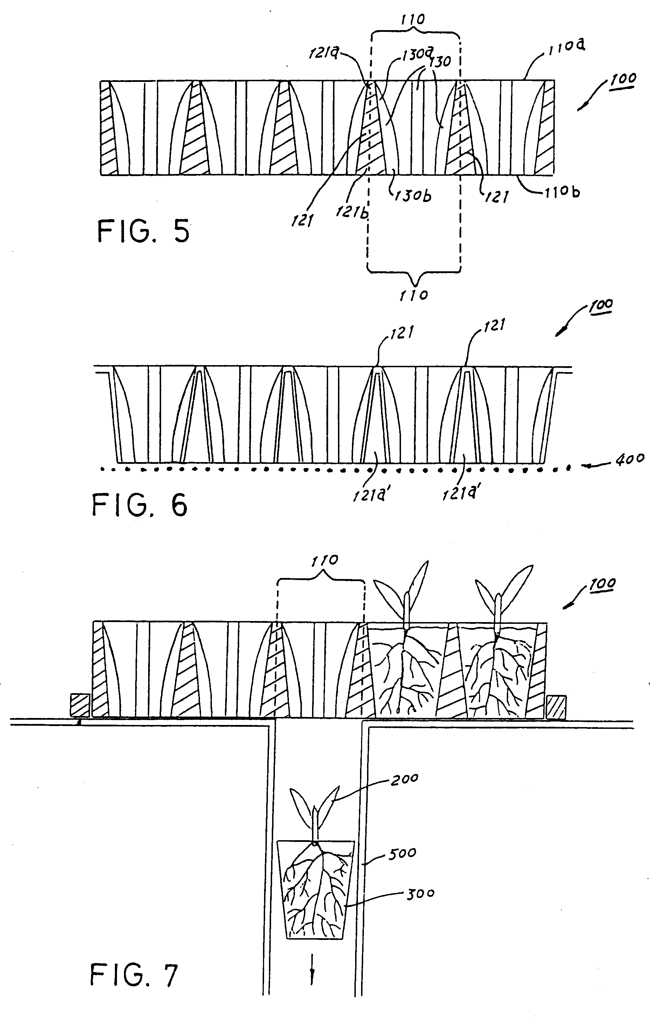

Referring further to Fig. 5, the walls 121, 122 (only the lengthwise walls 121 are shown) that set apart each cell 110 are formed in such a way that the thickness becomes greater toward the bottom end 121b. Such an arrangement allows the bottom opening 110b of the cell 110 to be narrower than the top opening 110a. Also, each of the fin-like members 130 is tapered in such a way that its lower end 130b is greater in breadth than the upper end 130a.

When the growing medium 300 is placed in the cell 110, the aforementioned arrangements of the tapered walls 121, 122 and the fin-like members 130 in conjunction acts as a firm support that prevents the growing medium 300 from falling away from the cell 110 through the bottom opening 110b of the cell 110. In the cell 110, the provision of the four fin-like members 130 acts as a support that prevents the growing medium 300 from dropping through the bottom opening 110b of the cell 110.

Furthermore, it is an important aspect of the present invention that the provision of the fin-like members 130 acts also as obstructions that prevent part of the roots of the seedling from growing sideways to the inner surface of the surrounding walls 121, 122, effectively forcing part of the roots to grow downwards instead of sideways. With one part of the roots forced downwards (where fin-like members 130 are not provided) and the other part growing sideways (where fin-like members 130 are not provided), the roots can therefore be spread out in various directions so that there would be a less degree of entangling and binding of the roots. It is another important aspect of the present invention that, since the bottom opening 110b is left open, the bottom of the growing medium 300 is in contact with air, thereby allowing air-pruning to the roots of the seedlings.

Fig. 6 shows another embodiment of the seedling tray 100 according to the present invention, in which the walls 121, 122 that set apart the cells 110 are formed with a hollowed portion 121a'. Such a provision can greatly reduce the amount of material used to construct the seedling tray, thus saving cost. Furthermore, in order to allow an air gap between the bottom opening 110b of the cells 110 and the ground so as to facilitate air-pruning from the atmosphere to the roots, a support 400 such a screen or bars can be placed beneath the seedling tray 100 so as to hold up the seedling tray 100 slightly off the ground.

When the seedlings have grown to a certain extent, they can be transplanted to fields or flowerpots. Referring to Fig. 7, in the transplantation the seedling tray 100 is used in conjunction with an automated transplanting apparatus (not shown) having a sucking tube 500 to transplant each seedling in the seedling tray 100 to the soil of the field or flowerpots. The transplanting apparatus (not shown) moves the seedling tray 100 in such a way that each cell 110 is positioned one by one to the top of the sucking tube 500 so that the sucking tube 500 can apply a sucking force through the bottom opening 110b of the cell 110 to pull the growing medium 300 along with the seedling 200 downwards.

Since the growing medium 300 is a soft matter that is compressible, it can pass through the gap between the fin-like members 130 and the narrower bottom opening 110b of the cell 110 when subject to a strong enough sucking force. As a result, the growing medium 300 along with the seedling 200 can be removed from the cell 110 and fall down through the sucking tube 500 to a specific spot on the soil of the field or a specific flowerpot (not shown) where it is intended to be planted. After that, the seedling tray 100 is moved automatically by the automated transplanting apparatus (not shown) to position the next cell to the top of the sucking tube 500 so as to transplant another seedling.

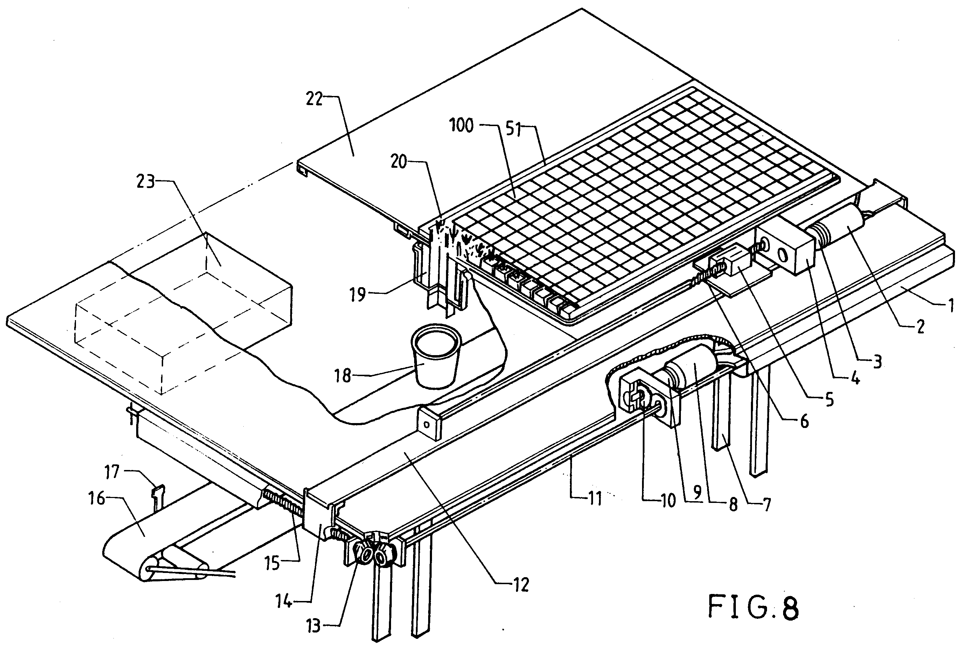

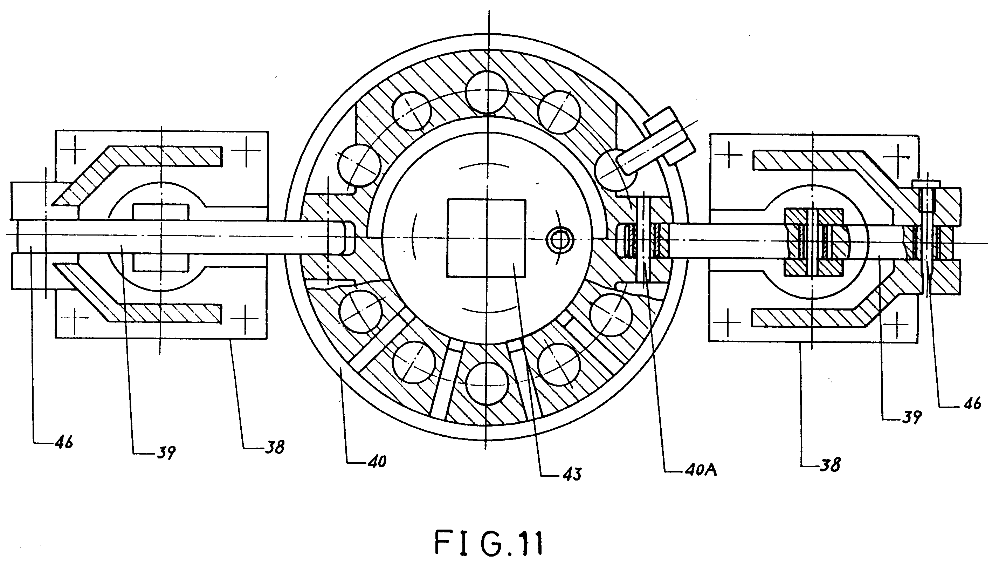

Referring to Figs. 8 to 13, a seedling transplanting machine in accordance with the present invention is generally comprised of a seedling tray, two transmission mechanisms, a seedling drop unit, and a tillage mechanism.

The seedling tray, referenced by 100, is mounted on a sliding frame 51, which is made to slide on a platform 22 above the machine base 1. The seedling drop unit 19 is mounted on the platform 22 at the bottom. The sliding frame 51 is moved by the transmission mechanisms through the control of a microprocessor-operated controller 23. The seedling tray 100 comprises rows of seedling cells 110 aligned longitudinally as well as transversely to hold seedlings 20. The seedling drop unit 19 comprises a mounting frame 37, a tapered spring 50, a planting tube 43, a fixed piston 41, a movable sleeve 40, a bottom cover 45, and a door of fabrics 44. The mounting frame 37 is fixedly fastened to the platform 22 at the bottom. The planting tube 43 has a top end inserted through a hole 37A on the mounting frame 37 and fixedly mounted within a hole 22A on the platform 22. The fixed piston 41 fits into the movable sleeve 40 and fixedly mounted around the planting tube 43. The bottom cover 45 covered on the movable sleeve 40 at the bottom defining a variable air chamber 42 with the bottom surface of the fixed piston 41. The bottom cover 45 has a center opening 45A of diameter slightly bigger than the outer diameter of the planting tube 43. The door of fabrics 44 is mounted on the bottom cover 45 to control the passage through the center opening 45A of the bottom cover 45. Furthermore, the movable sleeve 40 of the seedling drop unit 19 has mounting lugs 40A for connection to a accelerating lever mechanism (this will be described further).

The two transmission mechanisms are respectively mounted on the platform 22 at both sides. The platform 22 comprises a rail 12 transversely disposed at the top. The first transmission mechanism which consists of a reversible motor 2, an electromagnetic clutch 3, a transmission gear box 4, a screw rod 6 and a screw nut 5 is mounted on the rail 12. The screw nut 5 is fastened to the sliding frame 51. The second transmission mechanism which consists of a reversible motor 8, an electromagnetic clutch 9, a transmission gear box 10, two screw rods 15 and two screw nuts 14 is mounted on the platform 22 at the bottom. The transmission gear box 10 includes a transmission rod 11 extending from the transmission gear box 10 and disposed in parallel with the platform 22. The two screw rods 15 (only one is shown) are disposed in parallel at two opposite sides and respectively connected to the transmission rod 11 at right angles by bevel gears 13. The screw nuts 14 (only one is shown) are respectively threaded onto the screw rods 15. The aforesaid rail 12 is mounted on the screw nuts 14.

The reversible motors 2 and 8 are controlled by the microprocessor-operated controller 23 to turn in either direction causing the electromagnetic clutches 3 and 9 to move into a connected or a disconnected position. When the reversible motors 2 and 8 rotate in one direction and the electromagnetic clutches 3 and 9 are moved into the connected position, the screw rods 6 and 15 are turned in one direction causing the screw nuts 5 and 14 to move the sliding frame 51 and the seedling tray 100 in one direction step by step (cell by cell). When the reversible motors 2 and 8 rotate in a reversed direction, the electromagnetic clutches 3 and 9 are moved into the connected position, the screw rods 6 and 15 are turned in the reversed direction causing the nuts 5 and 14 to move the sliding frame 51 in the reversed direction step by step (cell by cell). The first transmission mechanism controls the sliding frame 51 and the seedling tray 100 to move in the transverse direction. The second transmission mechanism controls the sliding frame 51 and the seedling tray 100 to move in the longitudinal direction. The first and second transmission mechanisms are controlled by the microprocessor-operated controller 23 to move transversely or longitudinally in either direction step by step (cell by cell) so that the seedling cells 110 are alternatively aligned with the center opening 45A of the seedling drop unit 19 for planting seedlings 20.

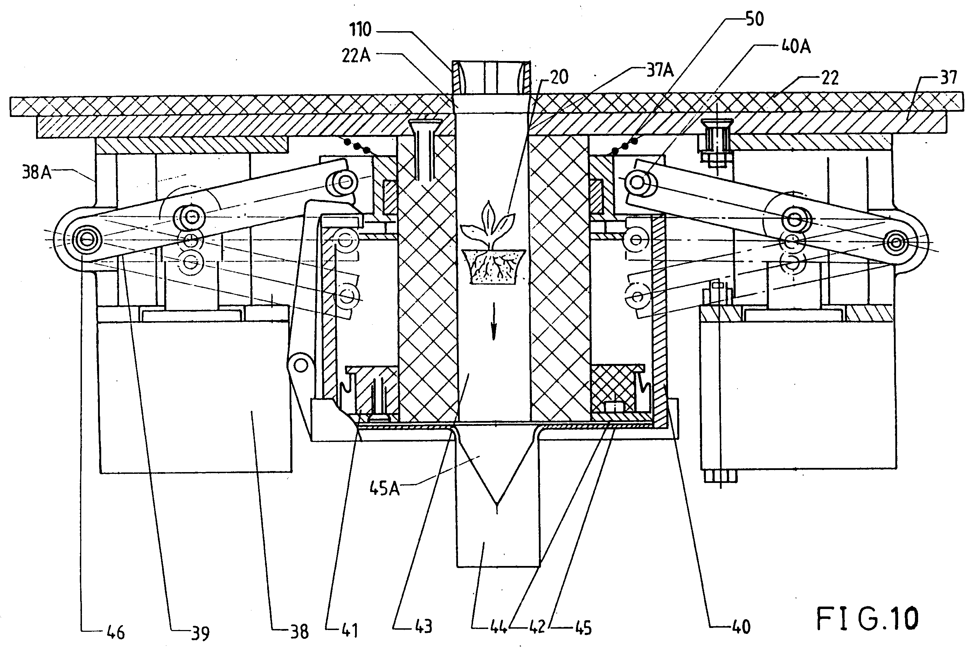

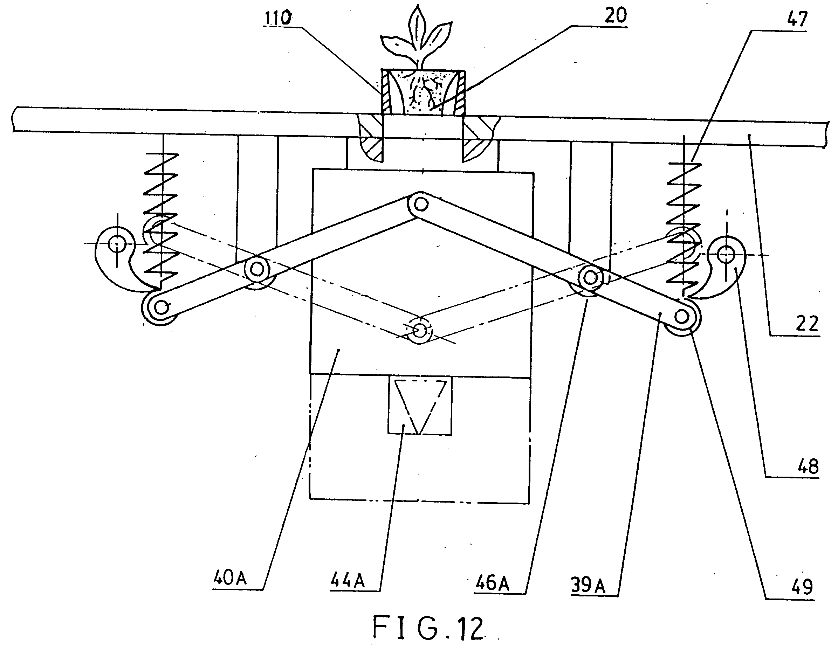

Referring to Figures 10 and 12, seedling drop unit 19 is provided with an accelerating lever mechanism including a pneumatic cylinder 38 and a lever 39. Cylinder 38 is mounted on two sides of a movable sleeve 40 and fixed on a mounting frame 37. Movable sleeve 40 has a mounting lug 40A, and lever 39 has one end connected to the mounting lug 40A of the movable sleeve 40, another end connected to piston rod of pneumatic cylinder 38. Piston (not shown) moves reciprocatingly within cylinder 38. The accelerating levers 39 each has one end pivotally mounted on to a bracket 38A with fulcrm 46, bracket 38A being adapted to mount cylinder 38 onto mounting frame 37. A tapered spring 50 is disposed between movable sleeve 40 and mounting frame 37 to urge movable sleeve 40 downwards. Alternatively, a cam and spring set may be used to replace the aforesaid pneumatic cylinder 38. The cam and spring set comprises a cam 48 and a spring 47. The spring 47 has one end fixedly fastened to the platform 22 at the bottom and an opposite end fastened to the top end (the end of effort) of the lever 39A. The top end of the lever 39A is mounted with a roller 49. The cam 48 matches with the roller 49. The rotation of the cam 48 can be achieved by means of the operation of a motor or any suitable mechanical power drive.

When the pneumatic cylinders 38 are operated, the levers 39 are oscillated on the the fulcrums 46 respectively, causing the cylinder sleeve 40 reciprocated vertically. At the same time the tapered spring 50 relaxes and helps the cylinder sleeve 40 moving down quicker. When the cylinder 40 is moving downwards, the volume of the variable air chamber 42 is relatively increased, causing the door of fabrics 44 closed, and therefore a vacuum is produced in the planting tube 43. When a vacuum is produced in the planting tube 43, the seedlings 20 with the medium are sucked into the planting tube 43 from one seedling cell 110 of the tray 100. As the seedlings 20 are sucked into the planting tube 43 from one seedling cell 110, the negative pressure in the planting tube 43 is simultaneously reduced, causing the door of fabrics 44 opened again for letting the seedlings 20 to pass, and therefore the seedlings 20 are planted in a groove in the paddy field.

Besides the pneumatic cylinder, a cam-and-spring mechanism may be used to operate the seedling drop mechanism.

When the cam and spring set is used, the operation is outlined hereinafter. When the cam 48 is turned by a motor or any mechanical power drive, the roller 49 is moved to stretch the spring 47. As the crest of the cam 48 passes over the roller 49, the spring 47 immediately returns to its former shape causing the lever 39A turned to move the cylinder 40A downwards, and therefore the seedlings 20 are drawn out of the respective seedling cell 110 and the planting tube 43 and put in a groove in the paddy field.

Besides the above described cylinder and spring-and-cam mechanism, an electromagnetic device may be employed to drive the seedling drop unit 19. Because an electromagnet can be rapidly energized and released, a vacuum can be more efficiently produced in the planting tube 43. Therefore, this alternate arrangement is particularly suitable for a greenhouse transplanting machine constructed according to the present invention.

As the movable sleeve 40 of the seedling drop unit 19 is reciprocated through first-order levers, the structure of the seedling drop unit 19 is simple, and no soil will be sucked in the variable air chamber 42 within the movable sleeve 40. Therefore, the seedling drop unit 19 achieves an accurate planting operation. Because the moving parts of the seedlings transplanting machine are controlled by the microprocessor operated controller 23, the operation of the seedlings transplanting machine is easy. Therefore, the seedlings transplanting machine of the present invention is suitable for transplanting a variety of seedlings in greenhouses as well as farm lands.

Figure 8 shows a seedling transplanting machine suitable for use in greenhouses. The platform 22 is supported on upright supports 7. The seedling tray 100 is carried on the sliding frame 51, having rows of seedling cells 110 aligned longitudinally as well as transversely. Each seedling cells 110 has both ends open. The seedling drop unit 19 is mounted on the platform 22 at the bottom. Two transmission mechanisms are mounted on the platform 22 at both sides. The first transmission mechanism which is mounted on the platform 22 at the top controls the movement of the sliding frame 51 in the transverse direction, comprised of a reversible motor 2, a transmission gear box 4, an electromagnetic clutch 3, a screw rod 6 and a screw nut 5. The second transmission mechanism which is mounted on the platform 22 at the bottom controls the movement of the sliding frame 51 in the longitudinal direction, a reversible motor 8, a transmission gear box 10 having a transmission rod 11, an electromagnetic clutch 9, two screw rods 15 respectively coupled to either end of the transmission rod 11 by bevel gears 13, and two screw nuts 14 respectively threaded onto the screw rods 15 and fixedly fastened to either end of a rail 12. The rail 12 is mounted on the platform 22 at the top in the transverse direction. The first transmission mechanism is controlled to reciprocate the sliding frame 51 along the rail 12. The first and second transmission mechanisms are controlled by a microprocessor-operated controller 23, which is mounted on the platform 22 at the bottom. The reference number 16 indicates a belt conveyer 16 spaced from the seedling drop unit 19 at the bottom. The reference number 18 indicates a flower pot. There are provided two photoelectric sensors 17 (only one is shown), one for detecting the moving speed of the flower pot 18 on the belt conveyer 16, the other for controlling the seedling drop unit 19 to draw seedlings 20 from the seedling tray 100 into the flower pot 18. Any suitable power drive such as pneumatic cylinders, cam and spring sets, electromagnetic solenoid, etc. can be used to drive the seedling drop unit 19. Either single power source or dual-power source may be employed.

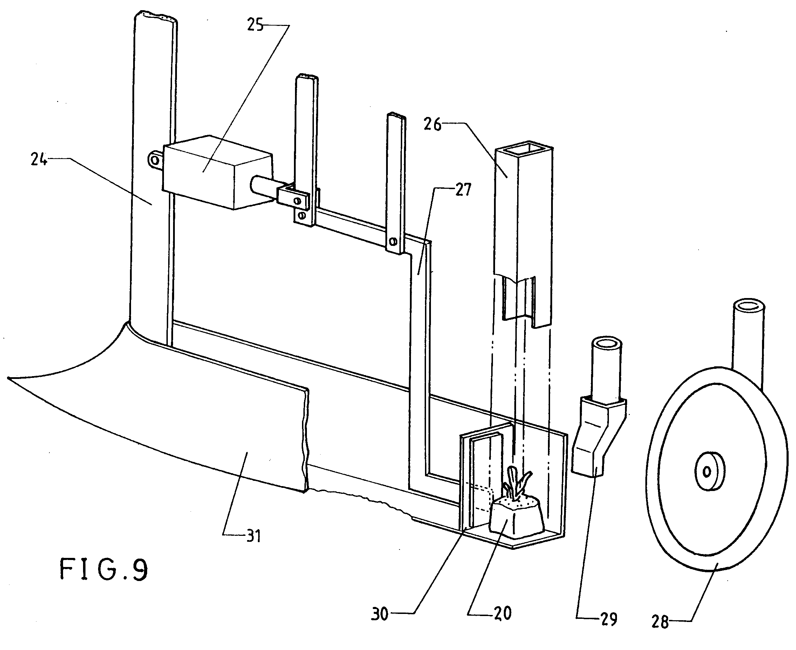

The aforesaid seedling transplanting machine can be used for working in farm lands when a tillage mechanism is installed. Figure 9 illustrates a tillage mechanism according to the present invention. The tillage mechanism comprises a opener 31, a seedling pusher 30, a water sprayer 29, and packing wheels 28 (only one is shown). The opener 31 is fastened to the machine base by a supporting frame 24. When seedlings 20 are drawn into the planting tube 43 they are immediately guided out of the planting tube 43 to a bottom plate of the opener 31 by a guide tube 26. At the same time, the cylinder 25 which is mounted on the supporting frame 24 is turned on to drive the seedling pusher 30 through a four-bar linkage 27, causing the seedling pusher 30 to push the seedlings 20 out of the opener 31 into the groove being duly made by the opener 31 in the field.

A seedling transplanting machine for use in farm land must include a hitch or coupling so that it can be coupled to a farm tractor.

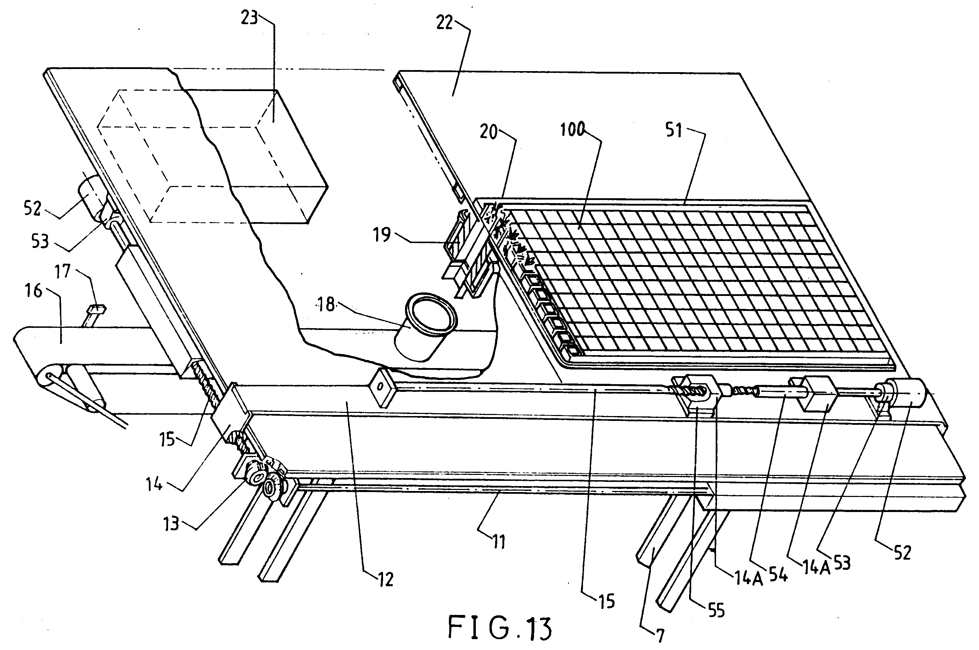

Figure 13 shows an alternate form of the seedlings transplanting machine for use in greenhouses. This alternate form uses a step motor 52 to drive the screw rod(s) 15. The output shaft of the step motor 52 is supported on a bearing block 53 and coupled to the screw rod(s) 15. When the screw rod(s) 15 is (are) rotated, the screw nut(s) 14 is (are) moved to carry the sliding frame 51 transversely or longitudinally. The transmission mechanism for controlling the transverse movement of the sliding frame 51 includes two screw nuts 14A connected together by a connecting tube 54, of which one has a steering guide 55 which keeps the screw nut 14 moved along the rail 12. The other parts of the seedlings transplanting machine are remained identical relative to what is shown in Figure 8.

Pneumatic cylinders 38 may be substituted by hydraulic cylinders as desired.

## Claims

1. A seedling transplanting machine comprising:
a machine base (1) having a platform (22) at the top and a rail (12) transversely disposed above said platform and reciprocated longitudinally;
a sliding frame (51) placed on said platform and reciprocated along said rail;
a tray (100) carried on said sliding frame;
a microprocessor-operated controller (23) mounted on said machine base;
a first transmission mechanism (2, 3, 4, 5, 6) controlled by said microprocessor-operated controller to move said sliding frame along said rail;
a second transmission mechanism (8, 9, 10, 14, 15) controlled by said microprocessor-operated controller to reciprocate said rail longitudinally;
a seedling drop unit (19) mounted on said machine base below said platform and controlled by said microprocessor-operated controller to draw seedlings away from said tray through a hole on said platform, permitting the seedlings to be planted in field or guided to predetermined places, said seedling drop unit comprising a mounting frame (37) fixedly fastened to said platform at the bottom, a planting tube (43) having a top end inserted through a hole (37A) on said mounting frame and fixedly mounting within a hole (22A) on said platform, a fixed piston (41) fixedly mounted around said planting tube at the bottom, a movable sleeve (40) fitting around said fixed piston and reciprocated vertically, a bottom cover (45) covered on said movable sleeve and defining with said fixed piston a variable suction chamber (42), said bottom cover having a centre opening (45A) of diameter bigger than the outer diameter of said planting tube, a door of fabrics controlled to open and close the centre opening of said bottom cover, and a movable sleeve driving mechanism (38) controlled to reciprocate said movable sleeve causing a vacuum produced to draw seedlings away from said tray.

2. The seedling transplanting machine of claim 1, further including a tillage mechanism mounted on said machine base and controlled by said microprocessor-operated controller, said tillage mechanism comprised of an opener (31) controlled to plow the soil, a seedling pusher (30) controlled to push seedlings out of said opener to the groove on the soil worked by said opener, a water sprayer (29) controlled to spray water over the planted seedlings, and packing wheels (28) controlled to pack the soil.

3. The seedling transplanting machine of claim 1, wherein said first transmission mechanism is mounted on said rail, comprised of a motor, a transmission gear box, an electromagnetic clutch controlled to couple said motor and said transmission gear box, a screw rod turned by said motor through said transmission gear box, a screw nut threaded onto said screw rod and fixedly fastened to said sliding frame, said sliding frame being carried by said screw nut to move along said rail when said screw rod is turned by said motor through said transmission gear box.

4. The seedling transplanting machine of claim 1, wherein said second transmission mechanism comprises two screw rods longitudinally mounted on said platform at the bottom, two screw nuts respectively threaded onto said screw rods and fixedly fastened to either end of said rail, a motor, a transmission gear box having a transmission rod coupled between said screw rods by bevel gears, an electromagnetic clutch controlled to couple said motor and said transmission gear box, said rail being carried by said screw nuts to move along said screw rods when said screw rods are turned by said motor through said transmission gear box.

5. The seedling transplanting machine of claim 1, wherein said movable sleeve driving mechanism of said seedling drop unit comprises two driving cylinders disposed at two opposite sides by said movable sleeve of said seedling drop unit, two accelerating levers respectively connected between said movable sleeve of said seedlings drop unit and a bracket for mounting said driving cylinders and driven by said driving cylinders to reciprocate said movable sleeve vertically, and a tapers spring means for urging said movable sleeve downwards.

6. The seedling transplanting machine of claim 1, wherein said movable sleeve driving mechanism of said seedling drop unit comprises two levers of first-order lever disposed at two opposite sides relative to said movable sleeve and having each a first end pivoted to said movable sleeve and a second end coupled with a roller, two spring means having each one end suspended from said platform and an opposite end connected to the second end of either lever, a driving device, and two cams mounted on said machine base at two opposite locations and turned by said driving device to pass through the roller of either lever to cause said levers to oscillate.

7. The seedling transplanting machine of claim 6, wherein said driving device is an electromagnetic device.

8. The seedling transplanting machine of any preceding claim, wherein the seedling tray (100) is for cultivating seedlings on a growing medium, and comprises:
(a) at least a cell (110) for containing the growing medium, said cell being partitioned off by a wall (121, 122) and having its top and bottom left open, said wall being sloped in such a way that the bottom of said cell is narrower than the top; and
(b) a plurality of fin-like members (130), provided on said wall surrounding said cell.

9. The seedling transplanting machine of claim 8, wherein said cell (110) is provided with four fin-like members.

10. The seedling transplanting machine of claim 8, wherein each of said plurality of fin-like members (130) is tapered in such a way that its bottom end is greater in breadth than its upper end.
